# EUROPEAN PATENT APPLICATION

(11) **EP 4 365 981 A1**
(43) Date of publication of application: **08.05.2024**
(21) Application number: 23207250.4
(22) Date of filing: 01.11.2023
(51) Int. Cl.: H01M 4/134, H01M 4/1395, H01M 4/36, H01M 4/38, H01M 4/587, H01M 4/02

(54) **NEGATIVE ACTIVE MATERIAL FOR RECHARGEABLE LITHIUM BATTERY AND RECHARGEABLE LITHIUM BATTERY INCLUDING SAME**

(30) Priority: 03.11.2022 KR 20220145307
(71) Applicant: Samsung SDI Co., Ltd., Yongin-si, Gyeonggi-do 17084 (KR)
(72) Inventor: KIM, Hyejin, 17084 Yongin-si (KR); KIM, Yongseok, 17084 Yongin-si (KR); YU, Sojeong, 17084 Yongin-si (KR); SHEEM, Kyeu Yoon, 17084 Yongin-si (KR); KIM, Jungjoon, 17084 Yongin-si (KR); KIM, Jaewon, 17084 Yongin-si (KR); NAH, Jaehou, 17084 Yongin-si (KR); LEE, Eunjoo, 17084 Yongin-si (KR)
(74) Representative: Marks & Clerk LLP

(57) **Abstract**

Disclosed are a negative active material for a rechargeable and a rechargeable lithium battery including the same. The negative active material for the rechargeable lithium battery includes a core including a porous silicon and a magnesium and a carbon layer on a surface of the core, wherein an amount of the magnesium is about 1 wt% to about 12 wt% based on 100 wt% of a total weight of the negative active material.

## Description

### BACKGROUND

### (a) Field

Embodiments of the present disclosure relate to a negative active material for a rechargeable lithium battery and a rechargeable lithium battery including the same.

### (b) Description of the Related Art

Electric vehicle and ESS (energy storage system) market expansion requires high-capacity and high efficiency batteries, and studies for using a silicon-based material as a negative active material of the battery have been undertaken.

The silicon-based negative active material has advantageous for exhibiting high-capacity and high efficiency, but has shortcoming related to a volume expansion during charge and discharge. For overcoming these shortcomings, attempts have been made to use a composite material with a carbon matrix, or a silicon oxide or a silicon alloy.

### SUMMARY

One embodiment provides a negative active material for a rechargeable lithium battery being capable of improving initial efficiency and cycle-life characteristics.

Another embodiment provides a rechargeable lithium battery including the negative active material.

One embodiment provides a negative active material for a rechargeable lithium battery including a core including a porous silicon and a magnesium; and a carbon layer on the surface of the core, wherein an amount of the magnesium is about 1 wt% to about 12 wt% based on the total 100 wt% of the negative active material.

The amount of the magnesium may be about 1 wt% to about 10 wt%, or about 3 wt% to about 10 wt% based on 100 wt% of the total amount of the negative active material.

Magnesium may be included in the negative active material as an MgSiOs compound.

The carbon may be an amorphous carbon and the amorphous carbon may be soft carbon, hard carbon, or combinations thereof.

An amount of the carbon may be about 5 wt% to about 45 wt% based on the total weight of the negative active material.

The porous silicon may include pores having an average size of about 50 nm or more, and in some embodiments, may have pores with an average size of about 50 nm to about 500 nm.

The negative active material may be prepared by primarily heat-treating magnesium silicide to prepare a heat-treated product, etching the heat-treated product to prepare porous silicon, mixing the porous silicon with an amorphous carbon precursor to prepare a mixture, and secondarily heat-treating the mixture. Another embodiment may relate to preparing a method of preparing a negative active material for a rechargeable lithium battery as described herein.

The primary heat-treatment may be performed under an air atmosphere. The primary heat-treatment may be performed at about 600 °C to about 700 °C for about 5 hours to about 30 hours.

The etching may be performed by using an acid. The acid may be hydrochloric acid.

A mixing ratio of the porous silicon and the amorphous carbon precursor may be about 95:5 to about 55:45 by weight ratio.

The secondary heat-treatment may be performed at about 800 °C to about 1200 °C.

Another embodiment provides a rechargeable lithium battery including a negative electrode including the negative active material, a positive electrode including a positive active material, and a non-aqueous electrolyte.

The negative electrode may include the negative active material as a first negative active material and may further include crystalline carbon as a second negative active include material.

A mixing ratio of the first negative active material and the second negative active material may be about 1:99 to about 40:60 by weight ratio.

At least some of the above and other features of the invention are set out in the claims.

Other embodiments are included in the following detailed description.

The negative active material for a rechargeable lithium battery according to one embodiment may exhibit excellent initial efficiency and cycle-life characteristics.

### BRIEF DESCRIPTION OF THE DRAWINGS

FIG. 1 is a schematic view showing the structure of a rechargeable lithium battery according to an embodiment.
FIG. 2 is a SEM image of the surface of the negative active material according to Example 1.
FIG. 3 is a SEM image of a cross-section of the negative active material according to Example 1.
FIG. 4 is a SEM image of a cross-section of the negative active material according to Comparative Example 5.
FIG. 5 is a graph showing an XRD result of the negative active material according to Example 1.
FIG. 6 is an EDS image of a cross-section of the negative active material according to Example 1.
FIG. 7 is an image of the EDS elemental analysis of the negative active material according to Example 1.

### DETAILED DESCRIPTION

Hereinafter, embodiments are described in detail. However, these embodiments are only examples, so the present invention is not limited thereto and the present invention is defined by the scope of claims.

In the specification, when a definition is not otherwise provided, such a particle diameter (D50) indicates an average particle diameter (D50) where a cumulative volume is about 50 volume% in a particle distribution. The average particle size (D50) may be measured by a method well known to those skilled in the art, for example, by a particle size analyzer, or by a transmission electron microscopic image, or a scanning electron microscopic image. In some embodiments, a dynamic light-scattering measurement device is used to perform a data analysis, and the number of particles is counted for each particle size range, and from this, the average particle diameter (D50) value may be easily obtained through a calculation.

As used herein, the term "soft carbon" refers to graphitizable carbon materials and are readily graphitized by heat treatment at a high temperature, e.g., 2800 °C, and "hard carbon" refers to non-graphitizable carbon materials and are slightly graphitized by heat treatment.

A negative active material for a rechargeable lithium battery may include a core including a porous silicon and a magnesium and a carbon layer on a surface of the core. An amount of the magnesium may be about 1 wt% to about 12 wt% based on 100 wt% of the total weight of the negative active material, according to another embodiments, the amount of the magnesium may be about 1 wt% to about 10 wt% based on 100 wt% of the total weight of the negative active material, or according to still another embodiments, the amount of the magnesium may be about 3 wt% to about 10 wt%, about 3 wt% to about 9 wt%, about 3 wt% to about 8 wt%, or about 3 wt% to about 7 wt% based on 100 wt% of the total weight of the negative active material.

If the amount of the magnesium is within the range, excellent cycle-life characteristics and initial efficiency characteristics may be exhibited. If the amount of magnesium is out of the range, for example, an amount of magnesium is less than 1 wt%, the effects for preventing the remaining silicon oxide in the active material by reacting with silicon oxide (SiO₂) which may be naturally generated from silicon in air, may be insufficient. If silicon oxide remains, such a silicon oxide reacts with lithium during the initial charge and discharge to generate an irreversible phase (LiₓSiO_{y}), thereby deteriorating initial efficiency. If the amount of magnesium is more than 12 wt%, excessive magnesium may cause an irreversible reaction to occur, thereby decreasing initial efficiency.

In the negative active material according to some embodiments, magnesium may be present as an MgSiOs compound and may not substantially be present as a MgO compound.

In the negative active material, the presence of magnesium in the form of the MgSiOs compound is desired to effectively obtain the effects resulting from the inclusion of magnesium.

If magnesium is present in the form of the MgO compound, the capacity is reduced and if it is present in the form of MgSiN₂, this MgSiN₂ does not electrochemically react with lithium which leads to reduced capacity.

In embodiments, the carbon may be amorphous carbon. If the carbon of the carbon layer is the amorphous carbon, it may be uniformly coated on silicon, so the conductivity may be further enhanced, and power may be excellent, compared to crystalline carbon. An amount of the amorphous carbon may be about 5 wt% to about 45 wt% based on the total weight of the negative active material.

The amorphous carbon may be soft carbon, hard carbon, or a combination thereof.

In the negative active material, the negative active material may have pores with an average size of about 50 nm or more, or may have pores with an average size of about 50 nm to about 500 nm. According to embodiments, the pore may have an average size of about 50 nm to about 100 nm. The negative active material includes pores which may cause effective inhibition of the volume expansion of silicon generated during charging and discharging using the negative active material. This is because the included pores absorb the expanded volume, thereby suppressing the expansion of the total volume of the negative active material. The effects by suppressing the volume expansion due to pores may be more effectively obtained from a pore average size of about 50 nm or more.

In one embodiment, the pore size may be measured by a nitrogen adsorption method (BJH method), mercury porosimetry, etc.

The active material according to one embodiment may prepared by the following procedures.

First of all, magnesium silicide (Mg₂Si) may be oxidized. The oxidation renders to convert it into MgO and Si, and thus, an oxidized product where MgO is intercalated into Si may be prepared. The oxidation may be performed by primary heat-treatment under air. The primary heat treatment may be performed at about 600 °C to about 700 °C. The primary heat treatment may be performed for about 5 hours to about 30 hours.

The primary heat-treatment at 600 °C to 700 °C under a N₂ atmosphere does not oxidize magnesium silicide, which may result in the generation of the combustible silane gas during the subsequent oxide-treatment. The reaction under the N₂ atmosphere requires high-temperature heat-treatment of 900 °C or more, but high temperature causes magnesium to be present as MgSiN₂ which does not electrochemically react with lithium and is not suitable as a negative active material.

If the primary heat-treatment is performed under a CO₂ atmosphere, the reaction requires a primarily heat-treatment at 650 °C or more which results in simultaneous deposition of excessive carbon, making it impossible to control the carbon amount. If an amount of carbon is increased, capacity may be reduced.

Even if the heat treatment is performed in an air atmosphere, if the heat-treatment is performed at a temperature out of the range, Mg₂Si may remain and a side-reaction may occur.

Thereafter, the oxidized product may be subjected to etching using an acid. This procedure may be carried out by immersing the heat-treated product in the acid. In this etching procedure, MgO generated by oxidation may be partially dissolved in the acid to remove it.

The etching may be appropriately performed in order to leave behind partial amounts of MgO, which may be performed by controlling a ratio of mixing the oxidized product and the acid. In some embodiments, the mixing ratio of the oxidized product and the acid may be about 43:57 to about 46:54 by weight ratio, about 43.4:56.6 to about 45.3:54.7 by weight ratio, about 44:56 to about 45:55 by weight ratio, or about 44:56 to about 45.5:55.5 by weight ratio. In some embodiments, the mixing ratio of the oxidized product and the acid may be about 43:57 to about 46:54 by molar ratio, about 43.4:56.6 to about 45.3:54.7 by molar ratio, about 44:56 to about 45:55 by molar ratio, or about 44:56 to about 45.5:55.5 by molar ratio.

If the mixing ratio of the oxidized product and the acid is out of the range, for example, if the amount of the acid used is extremely small, too much MgO will remain, which results in the surprisingly deteriorated capacity of the battery using the final negative active material. Too much acid will cause excessive removal of MgO. For example, MgO may be virtually completely removed, so that there are insufficient amounts of MgO present to react with SiO₂ prepared by the subsequent process, so that the initial efficiency may not be effectively improved.

After etching, a filtration may be performed to obtain an etching product. In the etching product, portions from where MgO is removed may remain as pores, and thus, pores may be formed in Si, thereby enabling silicon to exist as a porous silicon.

The acid may be hydrochloric acid.

Thereafter, the etching product may be mixed with an amorphous carbon precursor.

The amorphous carbon precursor may be petroleum-based coke, coal-based coke, petroleum-based pitch, coal-based pitch, green coke, or a combination thereof.

A mixing ratio of the porous silicon and the amorphous carbon precursor may be about 95:5 to about 55:45 by weight ratio.

As such, the mixing of the etching product and the amorphous carbon precursor may allow control of the desired size of the generated pore. In some embodiments, if the mixing ratio of the etching product and the amorphous carbon precursor satisfies the range, the obtained pore size may be controlled to be about 50 nm or more, and according to one embodiment, about 50 nm or more and about 500 nm or less.

The mixture may be secondarily heat-treated to prepare a negative active material. The secondary heat-treatment may be performed at about 800 °C to about 1200 °C.

According to the secondary heat-treatment, the amorphous carbon precursor may be converted to an amorphous carbon which may be included in the final product, as an amorphous carbon, and the remaining MgO reacts with an oxide film (SiO₂) of the porous silicon to generate MgSiOs.

Another embodiment provides a rechargeable lithium battery including a negative electrode, a positive electrode, and an electrolyte.

The negative electrode may include a current collector and a negative active material layer on the current collector and including the negative active material according to one embodiment.

The negative active material layer may further include a crystalline carbon negative active material. The crystalline carbon negative active material may be unspecified shaped, sheet-shaped, flake-shaped, spherically-shaped, or fiber-shaped natural graphite or artificial graphite.

If the negative active material layer includes the negative active material according to one embodiment as a first negative active material, and crystalline carbon negative active material as a second negative active material, the first negative active material is positioned between the second negative active material particles to make good contact with the second negative active material, and thereby more effectively inhibit the expansion of the negative electrode.

Herein, the mixing ratio of the first negative active material:the second negative active material may be about 1:99 to about 40:60 by weight ratio.

If the first negative active material and the second negative active material are mixed and used at this range, the current density of the negative electrode may be further improved and the thin film electrode may be prepared. In some embodiments, the first active material including silicon in the negative electrode may exist more uniformly, and thus, the negative electrode expansion may be more effectively suppressed.

In the negative active material layer, the amount of the negative active material may be about 95 wt% to about 99 wt% based on the total weight of the negative active material layer.

The negative active material layer may include a binder, and optionally, may further include a conductive material. In the negative active material layer, the amount of the binder may be about 1 wt% to about 5 wt% based on the total weight of the negative active material layer. In another embodiments, if the conductive material is further included, about 90 wt% to about 98 wt% of the negative active material, about 1 wt% to about 5 wt% of the binder, and about 1 wt% to about 5 wt% of the conductive material may be used.

The binder improves binding properties of negative active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinyl chloride, carboxylated polyvinylchloride, polyvinyl fluoride, polyurethane, polytetrafluoroethylene, polyvinylidene fluoride, polyethylene, polypropylene, polyamideimide, polyimide, or combinations thereof.

The aqueous binder may be a styrene-butadiene rubber, an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polyepichlorohydrin, polyphosphazene, an ethylene propylene diene copolymer, polyvinyl pyridine, chlorosulfonated polyethylene, latex, a polyester resin, an acrylic resin, a phenol resin, an epoxy resin, polyvinyl alcohol, or combinations thereof.

If the aqueous binder is used as a negative electrode binder, a cellulose-based compound may be further used to provide viscosity. The cellulose-based compound includes one or more of carboxymethyl cellulose, hydroxypropylmethyl cellulose, methyl cellulose, or alkali metal salts thereof. The alkali metal may be Na, K, or Li. The cellulose-based compound may be included in an amount of about 0.1 parts by weight to about 3 parts by weight based on 100 parts by weight of the negative active material.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

The positive electrode may include a current collector and a positive active material layer formed on the current collector.

The positive electrode active material may include lithiated intercalation compounds that reversibly intercalate and deintercalate lithium ions, specifically, one or more composite oxides of a metal selected from cobalt, manganese, nickel, and combinations thereof, and lithium, may be used. In some embodiments, the compounds represented by one of the following chemical formulae may be used. LiₐA_{1-b}X_{b}D¹₂ (0.90≤a≤1.8, 0≤b≤0.5); LiₐA_{1-b}X_{b}O_{2-d}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiaE_{2-b}X_{b}O4-_{d}D¹_{c1} (0.90≤a≤1.8, 0≤b≤0.5, 0≤c1≤0.05); LiₐNi_{1-b-c}CO_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤ 0.5, 0<α< 2); LiₐNi_{1-b-c}Co_{b}X_{c}O_{2-α}T₂ (0.90≤a≤1.8, 0≤b≤0.5, 0≤c≤0.5, 0<α <2); LiₐNi_{1-b-c}Mn_{b}X_{c}D¹_{α} (0.90≤a≤1.8, 0≤b≤0.5, 0≤c≤0.5, 0<a≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤ 0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li _{(3-f)}Fe₂(PO₄)₃ (0≤f≤2); LiₐFePO₄ (0.90≤a≤1.8). In one embodiment, the positive electrode active material may include LiCoO₂., Li _{(3-f)}Fe₂(PO₄)₃ (0≤f≤2), LiₐFePO₄ (0.90≤a≤1.8), LiₐNi_{1-b-c}Co_{b}X_{c}O₂ (0.90≤a≤1.8, 0≤b≤0.5, 0≤c≤0.5, 0≤b+c≤0.4, X is Mn, or Al);

In the above chemical formulae, A is selected from Ni, Co, Mn, or combinations thereof; X is selected from Al, Ni, Co, Mn, Cr, Fe, Mg, Sr, V, a rare earth element, or combinations thereof; D¹ is selected from O, F, S, P, or combinations thereof; E is selected from Co, Mn, or combinations thereof; T is selected from F, S, P, or combinations thereof; G is selected from Al, Cr, Mn, Fe, Mg, La, Ce, Sr, V, or combinations thereof; Q is selected from Ti, Mo, Mn, or combinations thereof; Z is selected from Cr, V, Fe, Sc, Y, or combinations thereof; J is selected from V, Cr, Mn, Co, Ni, Cu, or combinations thereof; L¹ is selected from Mn, Al, or combinations thereof.

In some embodiments, the compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or mixtures thereof. The coating layer may be disposed in a method having no adverse influence on properties of a positive electrode active material by using these elements in the compound, and for example, the method may include any coating method such as spray coating, dipping, and the like, but is not illustrated in more detail since it is well-known in the related field.

In the positive electrode, a content of the positive active material may be about 90 wt% to about 98 wt% based on the total weight of the positive active material layer.

In some embodiments, the positive active material layer may further include a binder and a conductive material. The binder and the conductive material may be included in an amount of about 1 wt% to about 5 wt%, respectively based on the total amount of the positive active material layer.

The binder improves binding properties of positive electrode active material particles with one another and with a current collector. Examples of the binder may be polyvinyl alcohol, carboxymethyl cellulose, hydroxypropyl cellulose, diacetyl cellulose, polyvinyl chloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, styrene-butadiene rubber, an acrylated styrene-butadiene rubber, an epoxy resin, nylon, or the like, but is not limited thereto.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, a carbon fiber and the like; a metal-based material of a metal powder or a metal fiber including copper, nickel, aluminium, silver, and the like; a conductive polymer such as a polyphenylene derivative; or mixtures thereof.

The current collector may use aluminium foil, nickel foil, or a combination thereof, but is not limited thereto.

The positive active material layer and the negative active material layer may be prepared by mixing an active material, a binder and optionally, a conductive material in a solvent to prepare an active material composition and coating the active material composition on a current collector. Such the active material layer preparation will be known in the related arts and the detailed description is omitted in the specification. The solvent may be N-methyl pyrrolidone, but is not limited thereto. Furthermore, if the aqueous binder is used in the negative active material layer, the solvent may be water as a solvent used in the negative active material composition preparation.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester-based solvent may include methyl acetate, ethyl acetate, n-propyl acetate, dimethyl acetate, methyl propionate, ethyl propionate, propyl propionate, decanolide, mevalonolactone, caprolactone, or the like. The ether-based solvent may include dibutyl ether, tetraglyme, diglyme, dimethoxyethane, 2-methyltetrahydrofuran, tetrahydrofuran, or the like. The ketone-based solvent may include cyclohexanone, or the like. The alcohol-based solvent may include ethanol, isopropyl alcohol, or the like, and examples of the aprotic solvent may include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, sulfolanes, or the like.

The organic solvent may be used alone or in mixtures. If the organic solvent is used in a mixture, the mixture ratio may be controlled in accordance with a desirable battery performance, and it may be well known to those skilled in the related art.

The carbonate-based solvent may desirably include a mixture with a cyclic carbonate and a linear carbonate. The cyclic carbonate and linear carbonate are mixed together in a volume ratio of about 1:1 to about 1:9, and when the mixture is used as an electrolyte, it may have enhanced performance.

If the non-aqueous organic solvents are mixed and used, a mixed solvent of a cyclic carbonate and a linear carbonate, a mixed solvent of a cyclic carbonate and a propionate-based solvent, or a mixed solvent of a cyclic carbonate, a linear carbonate and a propionate-based solvent may be used. The propionate-based solvent may include methyl propionate, ethyl propionate, propyl propionate, or combinations thereof.

If a mixture of a cyclic carbonate and a linear carbonate, or a mixture of a cyclic carbonate and a propionate-based solvent is used, it may be desirable to use it with a volume ratio of about 1:1 to about 1:9 considering the performances. If a cyclic carbonate, a linear carbonate, and a propionate-based solvent may be mixed and used at a volume ratio of 1:1:1 to 3:3:4. The mixing ratios of the solvents may be appropriately adjusted according to desirable properties.

The non-aqueous organic solvent may further include an aromatic hydrocarbon-based solvent as well as the carbonate-based solvent. The carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

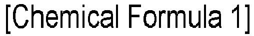

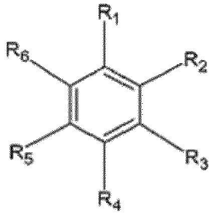

In Chemical Formula 1, R₁ to R₆ are the same or different and may each be selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The electrolyte may further include vinylene carbonate, vinylethyl carbonate, or an ethylene carbonate-based compound represented by Chemical Formula 2 as an additive for improving cycle life.

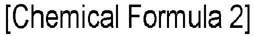

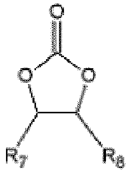

In Chemical Formula 2, R₇ and R₈ are the same or different and may each be independently hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, or the like. An amount of the additive for improving the cycle-life characteristics may be used within an appropriate range.

The electrolyte may further include vinylethylene carbonate, propane sultone, succinonitrile, or combinations thereof, and the used amount may be suitably controlled.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer of 0 to 20, lithium difluoro(bisoxalato) phosphate, LiCl, Lil, LiB(C₂O₄)₂(lithium bis(oxalato) borate: LiBOB), or lithium difluoro(oxalato)borate (LiDFOB). A concentration of the lithium salt may range from about 0.1 M to about 2.0 M. If the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. The separator may use polyethylene, polypropylene, polyvinylidene fluoride or multilayers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

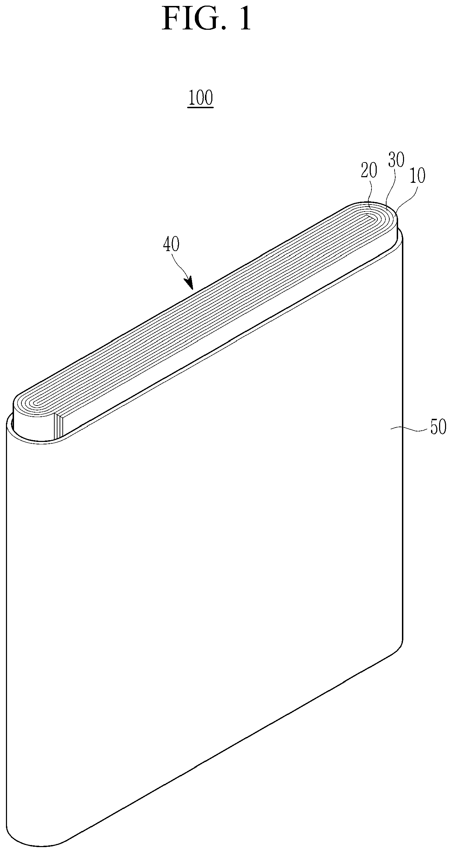

FIG. 1 is an exploded perspective view of a rechargeable lithium battery according to an embodiment. The rechargeable lithium battery according to some embodiments is illustrated as a prismatic battery but is not limited thereto and may include variously-shaped batteries such as a cylindrical battery, a pouch battery, and the like.

Referring to FIG. 1, a rechargeable lithium battery 100 according to one embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20 and the separator 30.

Hereinafter, examples of the present invention and comparative examples are described. These examples, however, are not in any sense to be interpreted as limiting the scope of the invention.

### (Example 1)

Magnesium silicide (Mg₂Si) was primarily heat-treated at 610 °C for 20 hours under an air atmosphere.

The primary heat-treated product was mixed with hydrochloric acid at a weight ratio of 43 : 57 (molar ratio of 43.2:56.8) for etching, thereby preparing an etching product.

The prepared etching product was mixed with a petroleum pitch as an amorphous carbon precursor at a weight ratio of 70: 30.

The resulting mixture was secondarily heat-treated at 950 °C to prepare a negative active material. The produced negative active material had a core including a porous silicon in which pores with an average size of 50 nm was formed and MgSiOs, and a soft carbon coating on the surface of the core. The pore size was measured by a mercury pore measurement.

The negative active material was used as a first negative active material, and natural graphite was used as a second negative active material, and the first negative active material, the second negative active material, a styrene butadiene rubber binder, and carboxymethyl cellulose as a thickener were mixed at a 12:85.5:1.5:1.0 weight ratio in a water solvent to prepare a negative active material slurry. The mixing ratio of the styrene butadiene rubber binder and the carboxymethyl cellulose thickener was to be a 60:40 by weight ratio.

The negative active material slurry was coated on a Cu foil current collector, dried, and pressurized by the general procedure to prepare a negative electrode including the current collector and a negative active material layer formed on the current collector.

Using the negative electrode, a LiCoO₂ positive electrode, and an electrolyte, a rechargeable lithium cell (full cell) was fabricated. As the electrolyte, 1.5M LiPF₆ dissolved in a mixed solvent of ethylene carbonate and ethylmethyl carbonate and dimethyl carbonate (20:10:70 volume ratio) was used.

### (Example 2)

A negative active material was prepared by the same procedure as in Example 1, except that the heat-treated product was mixed with hydrochloric acid at a weight ratio of 43.4:56.6 to etch. The produced negative active material had a core including a porous silicon in which pores with an average size of 50 nm was formed and MgSiOs, and a soft carbon coating on the surface of the core.

The negative active material was used to fabricate a negative electrode and a rechargeable lithium cell by the same procedure as in Example 1.

### (Example 3)

A negative active material was prepared by the same procedure as in Example 1, except that the heat-treated product was mixed with hydrochloric acid at a weight ratio of 44:56 to etch. The produced negative active material had a core including a porous silicon in which pores with an average size of 50 nm was formed and MgSiOs, and a soft carbon coating on the surface of the core.

The negative active material was used to fabricate a negative electrode and a rechargeable lithium cell by the same procedure as in Example 1.

### (Example 4)

A negative active material was prepared by the same procedure as in Example 1, except that the heat-treated product was mixed with hydrochloric acid at a weight ratio of 44.5:55.5 to etch. The produced negative active material had a core including a porous silicon in which pores with an average size of 50 nm was formed and MgSiOs, and a soft carbon coating on the surface of the core.

The negative active material was used to fabricate a negative electrode and a rechargeable lithium cell by the same procedure as in Example 1.

### (Example 5)

A negative active material was prepared by the same procedure as in Example 1, except that the heat-treated product was mixed with hydrochloric acid at a weight ratio of 45.3:54.7 to etch. The produced negative active material had a core including a porous silicon in which pores with an average size of 50 nm was formed and MgSiOs, and a soft carbon coating on the surface of the core.

The negative active material was used to fabricate a negative electrode and a rechargeable lithium cell by the same procedure as in Example 1.

### (Comparative Example 1)

A negative active material was prepared by the same procedure as in Example 1, except that the primary heat-treated product was mixed with hydrochloric acid at a weight ratio of 42.7:57.3 to etch.

The produced negative active material had a core including a porous silicon in which pores with an average size of 50 nm was formed, and a soft carbon coating on the surface of the core.

Using the negative electrode, a negative electrode and a lithium cell was fabricated by the same procedure as in Example 1.

### (Comparative Example 2)

A negative active material was prepared by the same procedure as in Example 1, except that the heat-treated product was mixed with hydrochloric acid at a weight ratio of 46.3:53.7 to etch. The produced negative active material had a core including a porous silicon in which pores with an average size of 50 nm was formed and MgSiOs, and a soft carbon coating on the surface of the core.

The negative active material was used to fabricate a negative electrode and a rechargeable lithium cell by the same procedure as in Example 1.

### (Comparative Example 3)

A negative active material was prepared by the same procedure as in Example 1, except that the heat-treated product was mixed with hydrochloric acid at a weight ratio of 47.1:52.9 to etch. The produced negative active material had a core including a porous silicon in which pores with an average size of 50 nm was formed and MgSiOs, and a soft carbon coating on the surface of the core.

The negative active material was used to fabricate a negative electrode and a rechargeable lithium cell by the same procedure as in Example 1.

### (Comparative Example 4)

Magnesium silicide (Mg₂Si) was primarily heat-treated at 610 °C for 20 hours under a N₂ atmosphere. The heat-treated product was not oxidized and maintained its state as Mg₂Si, which reacts with hydrochloric acid gas to generate the flammable SiH₄ (silane) gas and thus, due to the possibility of explosion, no further experiments were conducted.

### (Comparative Example 5)

A negative active material was prepared by the same procedure as in Example 1, except that magnesium silicide (Mg₂Si) was primarily heat-treated at 610 °C for 20 hours under a CO₂ atmosphere. The negative active material was used to fabricate a negative electrode and a rechargeable lithium cell by the same procedure as in Example 1.

### (Comparative Example 6)

Magnesium silicide (Mg₂Si) was primarily heat-treated at 610 °C for 20 hours under an air atmosphere.

The primary heat-treated product was mixed with a petroleum pitch as an amorphous carbon precursor at a weight ratio of 1.5 : 98.5, and then the mixture was heat-treated at 950 °C to prepare a negative active material. That is, etching using hydrochloric acid was not performed.

The negative active material was used to fabricate a negative electrode and a rechargeable lithium cell by the same procedure as in Example 1.

### (Comparative Example 7)

Magnesium silicide (Mg₂Si) was primarily heat-treated at 610 °C for 20 hours under an air atmosphere.

The primary heat-treated product was mixed with a petroleum pitch as an amorphous carbon precursor at a weight ratio of 16.3 : 83.7, and then the mixture was secondarily heat-treated at 950 °C to prepare a negative active material. That is, etching using hydrochloric acid was not performed.

The negative active material was used to fabricate a negative electrode and a rechargeable lithium cell by the same procedure as in Example 1.

### (Comparative Example 8)

20 kg of silicon powders with an average particle size of 20 µm, 50 kg of silicon dioxide powders with an average particle size of 20 nm, and 130 kg of silicon oxide powders (SiOₓ, x=1.03) with an average particle size of 200 µm were agitated using a henschel mixer for 2 hours to uniformly mix, thereby preparing a source powder mixture. The source powder mixture was secondarily heat-treated at 1000 °C for 2 hours under an argon atmosphere.

16 kg of metal magnesium and the heat-treated source powder mixture were respectively injected to a crucible-A and a crucible-B of the vacuum reactor, reduced a pressure to reach 0.1 torr, and then heated, thereby increasing a temperature of the crucible-A including the source powder mixture to 1450 °C to evaporate and increasing a temperature of the crucible-B including metal magnesium at 850 °C to evaporate. Thereafter, the reaction was performed for 5 hours under a vapor state. A reaction at the high temperature vapor was carried out in the high-temperature vapor to rapidly cool the silicon composite oxide lump deposited on the substrate inside the reactor using a water-cooled substrate to a room temperature.

The silicon composite oxide lump was mechanically pulverized for particle size control to achieve an average particle diameter of 6 µm.

50 g of the pulverized silicon composite oxide powder was put inside the tube-type electric furnace, and while flowing Ar and a methane gas respectively at 1 L/min, it was maintained at 1000 °C for 1 hour, thereby preparing silicon composite oxide-carbon composite powder coated with carbon on the surface, a Mg8-SiOx/C negative active material.

The negative active material was used to fabricate a negative electrode and a rechargeable lithium cell by the same procedure as in Example 1.

### (Comparative Example 9)

8 kg of silicon powders with an average particle size of 20 µm and 16 kg of silicon dioxide powders with an average particle size of 20 nm were added to 50 kg of water, stirred for 12 hours to uniformly mix, and then dried at 200 °C for 24 hours, thereby preparing a source powder mixture.

The source powder mixture and 2 kg of the metal magnesium were respectively injected into crucible-A and crucible-B of the vacuum reactor, reduced a pressure to reach 0.1 torr, and then heated crucible-A to 1500 °C and heated crucible-B to 900 °C, followed by reacting them for 5 hours.

A reaction at the high temperature vapor was carried out in the high-temperature vapor to rapidly cool the silicon composite oxide lump deposited on the substrate inside the reactor using a water-cooled substrate to a room temperature.

The silicon composite oxide lump was mechanically pulverized for particle size control to achieve an average particle diameter of 6 µm.

50 g of the pulverized silicon composite oxide powder was put inside the tube-type electric furnace, and while flowing Ar and a methane gas respectively at 1 L/min, it was maintained at 900 °C for 1 hour, thereby preparing a negative active material in which the surface of a silicon composite oxide powder was coated with carbon.

### (Comparative Example 10)

100 g of SiO with an average a particle diameter, D50 of 6 µm was mixed with 10 g of magnesium powder with an average particle diameter, D50 of 10 µm to prepare a first mixture. Thereafter, the first mixture was placed into a chamber and a primary heat-treatment was performed by heating at 950 °C for 2 hours.

100 g of the primary heat-treated particles and 6 g of lithium powders with an average particle diameter D50 of 5 µm were mixed to prepare a second mixture. The second mixture was then injected into a chamber and was secondary heat-treated by heating at 750 °C for 2 hours to prepare a negative active material.

The negative active material was used to fabricate a negative electrode and a rechargeable lithium cell by the same procedure as in Example 1.

### Experimental Example 1) Evaluation of amount of magnesium

The amounts of magnesium included in the negative active materials according to Examples 1 to 5 and the Comparative Examples 1 to 3, and 5 to 10 were measured by an ICP analysis method. The results are shown in Table 1.

### Experimental Example 2) Evaluation of initial capacity

The cells according to Examples 1 to 5 and Comparative Examples 1 to 3, and 5 to 10 were formation charged and discharged at 0.1 C once to measure charge capacity. The results are shown in Table 1, as an initial capacity. From the measured formation charge and discharge capacity, the initial efficiency (discharge capacity/charge capacity) was calculated. The results are shown in Table 1.

**Table 1**

| | Amount of Mg (wt%) | Initial capacity (mAh/g) | Initial efficiency (%) |
|---|---|---|---|
| Comparative Example 1 | 0 | 2455.4 | 88.6 |
| Example 1 | 1 | 2353.5 | 89.1 |
| Example 2 | 3 | 2271 | 90.1 |
| Example 3 | 5 | 2131.0 | 89.9 |
| Example 4 | 7 | 2040 | 89.3 |
| Example 5 | 10 | 1981.2 | 88.7 |
| Comparative Example 2 | 13.4 | 1758.9 | 88.6 |
| Comparative Example 3 | 16.4 | 1568.0 | 87.9 |
| Comparative Example 5 | 1 | 1754.7 | 88.1 |
| Comparative Example 6 | 1 | 264 | 70.0 |
| Comparative Example 7 | 10 | 390 | 69.7 |
| Comparative Example 8 | 8 | 1382 | 82.1 |
| Comparative Example 9 | 11 | 640 | 91 |
| Comparative Example 10 | 1.9 | 460 | 90 |

As shown Table 1, the cells according to Examples 1 to 5 using the negative active materials in which the amount of Mg is 1 wt% to 10 wt% exhibited excellent initial capacity and initial efficiency.

Whereas, Comparative Example 1 including no Mg exhibited good initial capacity, but bad initial efficiency, and Comparative Examples 2 and 3 including Mg at an amount of more than 10 wt% exhibited very low initial capacity and slightly deteriorated initial efficiency.

Comparative Example 5 which was heat-treated under a CO₂ atmosphere, exhibited both deteriorated initial capacity and initial efficiency, due to the increased carbon amount due to CO₂.

Comparative Examples 6 and 7 of which the structure is not porous exhibited significantly decreased in both initial capacity and initial efficiency.

Comparative Examples 8 to 10 using silicon dioxide exhibited extremely decreased initial capacity.

### Experimental Example 3) Evaluation of SEM and Measurements of porosity and expansion rate

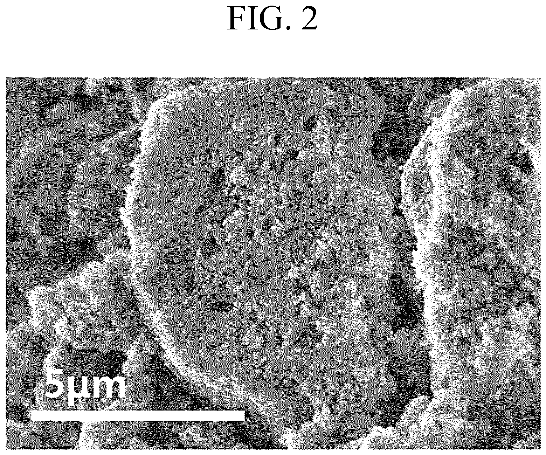

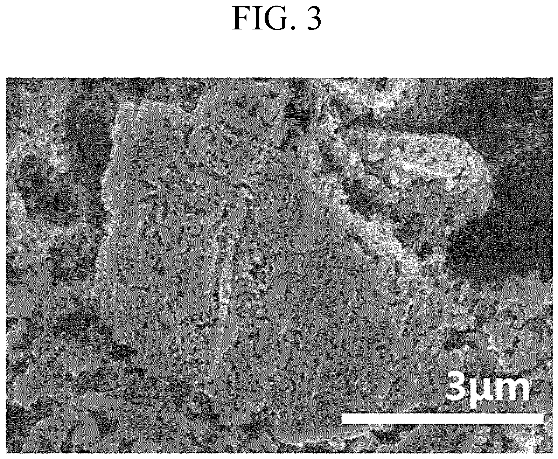

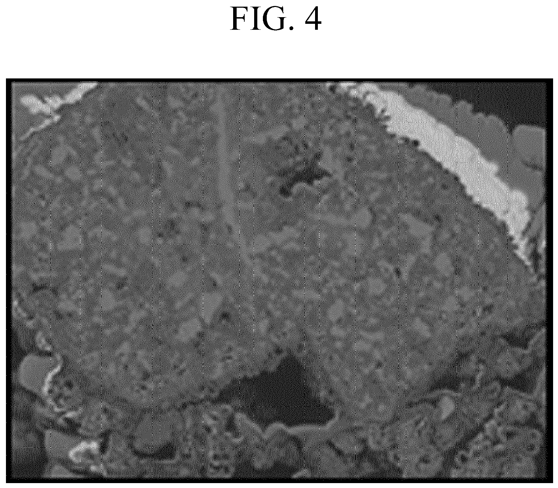

The SEM images of the surface of the negative active material according to Example 1 are shown in FIG. 2 and the SEM image of the cross-section thereof is shown in FIG. 3. The SEM image of the surface of the negative active material of Comparative Example 5 is shown in FIG. 4.

It can be seen from FIG. 2 and FIG. 3 that the negative active material of Example 1 has the porous structure with pores. Meanwhile, the negative active material of Comparative Example 5 had non-porous structure without pores.

The presence or the absence of negative active materials of Example 1 and Comparative Example 6 can be clearly seen from the porosity results obtained by measuring using the mercury porosity measurements, as the porosity results were 40.95% in Example 1 and 1.29% in Comparative Example 6.

The rechargeable lithium cells according to Example 1 and Comparative Example 6 were charged and discharged at 0.1 C for 700 minutes. The ratio (expansion rate) of the cell thickness as the repeated charge and discharge relative to the cell thickness before charge and discharge were measured. The results were approximately 20 % in Example 1 and about approximately 54% in Comparative Example 6.

### Experimental Example 4) Evaluation of XRD

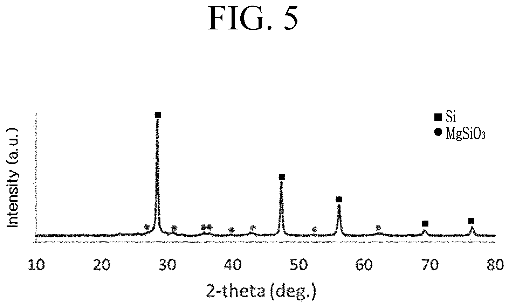

The X-ray diffraction peak intensity of the negative active material according to Example 1 was measured by using a CuKα-ray. The result is shown in FIG. 5. FIG. 5 shows that Si and MgSiOs are present in the negative active material.

### Experimental Example 5) EDS (Energy dispersive x-ray spectroscopy) analysis

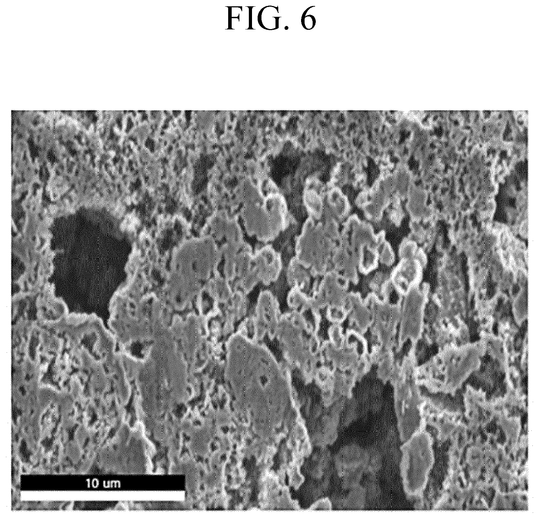

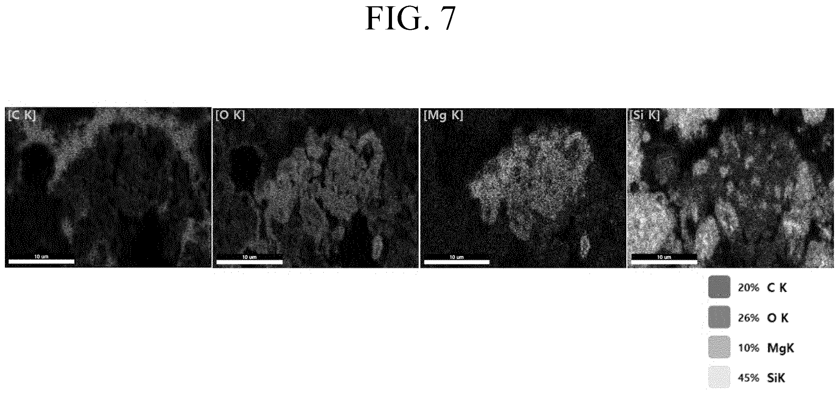

The negative active material according to Example 1 was cross-sectionally cut using a FIB (focused Ion Beam), and energy dispersive x-ray spectroscopy analysis was performed therefor to analyze the cross-section morphology, and the distribution degree of C, O, Mg, and Si. The results are shown in FIGS. 6 and 7, respectively.

As shown in FIG. 6 and FIG. 7, the negative active material of Example 1 is well coated with the carbon coating on its surface. Furthermore, from these results where which Mg is simultaneously observed wherever O is observed, Mg effectively holds the oxidization layer which causes a decrease in initial efficiency.

While this invention has been described in connection with what is presently considered to be practical example embodiments, it is to be understood that the invention is not limited to the disclosed embodiments, but, on the contrary, is intended to cover various modifications and equivalent arrangements included within the scope of the appended claims. Therefore, the aforementioned embodiments should be understood to be examples and not limiting the present invention in any way.

## Claims

1. A negative active material for a rechargeable lithium battery, comprising:
a core comprising a porous silicon and a magnesium; and
a carbon layer on a surface of the core,
an amount of the magnesium is about 1 wt% to about 12 wt% based on 100 wt% of a total weight of the negative active material.

2. The negative active material for a rechargeable lithium battery as claimed in claim 1, wherein the amount of the magnesium is about 1 wt% to about 10 wt% of 100 wt% of the total weight of the negative active material.

3. The negative active material for a rechargeable lithium battery as claimed in claim 1 or claim 2, wherein an amount of the magnesium is about 3 wt% to about 10 wt% based on 100 wt% of a total weight of the negative active material.

4. The negative active material for a rechargeable lithium battery as claimed in any one of claims 1 to 3, wherein the magnesium is included in the negative active material as an MgSiOs compound.

5. The negative active material for a rechargeable lithium battery as claimed in any one of claims 1 to 4, wherein the carbon is an amorphous carbon.

6. The negative active material for a rechargeable lithium battery as claimed in claim 5, wherein the amorphous carbon is soft carbon, hard carbon, or combinations thereof.

7. The negative active material for a rechargeable lithium battery as claimed in any one of claims 1 to 6, wherein an amount of the carbon is about 5 wt% to about 45 wt% based on the total amount of the negative active material.

8. The negative active material for a rechargeable lithium battery as claimed in any one of claims 1 to 7, wherein the porous silicon comprises pores having an average size of about 50 nm or more.

9. The negative active material for a rechargeable lithium battery as claimed in claim 8, wherein the pores have an average size of about 50 nm to about 500 nm.

10. The negative active material for a rechargeable lithium battery as claimed in any one of claims 1 to 9, wherein the negative active material is prepared by
primary heat-treating magnesium silicide to prepare a heat-treated product,
etching the heat-treated product to prepare a porous silicon,
mixing the porous silicon with an amorphous carbon precursor to prepare a mixture, and
secondary heat-treating the mixture.

11. The negative active material for a rechargeable lithium battery as claimed in claim 10, wherein the primary heat-treating is performed under an air atmosphere.

12. The negative active material for a rechargeable lithium battery as claimed in claim 10 or claim 11, wherein:
(i) the primary heat-treating is performed at about 600 °C to about 700 °C for about 5 hours to about 30 hours; and/or
(ii) the etching is performed by using an acid, optionally wherein the acid is hydrochloric acid; and/or
(iii) a mixing ratio of the porous silicon and the amorphous carbon precursor is about 95:5 to about 55:45 by weight ratio; and/or
(iv) the secondary heat-treating is performed at about 800 °C to about 1200°C.

13. A rechargeable lithium battery, comprising:
a negative electrode comprising a negative active material of any one of claims 1 to 12;
a positive electrode including a positive active material; and
a non-aqueous electrolyte.

14. The rechargeable lithium battery as claimed in claim 13, wherein the negative electrode comprises the negative active material as a first negative active material and further comprises crystalline carbon as a second negative active material.

15. The rechargeable lithium battery as claimed in claim 14, wherein a mixing ratio of the first negative active material and the second negative active material is about 1:99 to about 40:60 by weight ratio.
